# EUROPÄISCHE PATENTSCHRIFT

(11) **EP 2 435 768 B1**
(45) Veröffentlichungstag und Bekanntmachung des Hinweises auf die Patenterteilung: **10.07.2013**
(21) Anmeldenummer: 10754662.4
(22) Anmeldetag: 27.05.2010
(51) Int. Cl.: F24J 2/52, F16B 2/12

(54) **VORRICHTUNG ZUR BEFESTIGUNG EINER MONTAGESCHIENE AN EINEM GEWINDESCHAFT**
APPARATUS FOR FASTENING A MOUNTING RAIL TO A THREADED SHAFT
DISPOSITIF SERVANT À FIXER UN RAIL DE MONTAGE SUR UNE TIGE FILETÉE

(30) Priorität: 27.05.2009 DE 202009007526 U
(43) Veröffentlichungstag der Anmeldung: 04.04.2012
(73) Patentinhaber: Schletter GmbH, 83527 Kirchdorf (DE)
(72) Erfinder: KOCH, Bernd, 83512 Wasserburg am Inn (DE); URBAN, Hans, 83527 Haag (DE)
(86) Internationale Anmeldenummer: PCT/DE2010/000580
(87) Internationale Veröffentlichungsnummer: WO 2010/136022

(56) Entgegenhaltungen:
- EP-A1- 0 552 621
- DE-U1-202004 015 811
- DE-U1-202007 008 471

## Beschreibung

Die Erfindung betrifft eine Vorrichtung zur Befestigung einer Montageschiene an einem Gewindeschaft, insbesondere dem einer Stockschraube. Derartige Vorrichtungen werden häufig für die Unterkonstruktion von Solarmodulen auf Dächern verwendet.

Aus DE 20 2006 008 867 U1 ist eine Vorrichtung zur Befestigung einer Solaranlage auf einem Dach bekannt. Die Vorrichtung umfasst eine Stockschraube, an deren Gewindeschaft ein flaches Verbindungsblech mittels zweier Muttern fest angeschraubt ist. Das Verbindungsblech weist ein Langloch auf, auf dem eine Montageschiene verstellbar befestigt werden kann. Zur Befestigung der Montageschiene ist eine zweite Schraube erforderlich.

Aus DE 20 2007 008 471 U1 ist eine Vorrichtung bekannt, die eine Profilschiene mit einem anderen Bauteil mittels eines auf einer Rampe geführten Keils und nur einer Schraube fest verbinden kann. Die Vorrichtung ist für eine plane Montagebasis konzipiert, die größer ist als die zweigeteilte Rückfläche der Vorrichtung. Außerdem ist der Abstand zwischen der Schraube und der Profilschiene fest vorgegeben. DE 20 2007 008 471 U1 offenbart den Oberbegriff des Anspruchs 1.

Aufgabe der Erfindung ist es, eine Vorrichtung zur Befestigung einer Montageschiene an einem Gewindeschaft aufzuzeigen, die keiner eigenen Schraube bedarf und mit der die Montageschiene bezüglich des Gewindeschafts sowohl axial als auch radial verstellbar ist.

Die Aufgabe wird mit der in Anspruch 1 angegebenen Vorrichtung gelöst. Diese ist demgemäß zur Befestigung einer Montageschiene an einem Gewindeschaft vorgesehen, wobei die Montageschiene eine Auflageseite sowie einen Halterand aufweist. Ein solcher Halterand kann eigens seitlich vorgesehen sein. Vorzugsweise ist der Halterand jedoch zugleich der Rand eines hinterschnittenen Schraubkanals in der Auflageseite der Montageschiene. Der Gewindeschaft für die Vorrichtung kann ortsfest angeordnet und insbesondere derjenige einer Stockschraube sein.
Die Vorrichtung umfasst ein Halteelement, ein Klemmelement sowie zwei Muttern, wobei das Halteelement eine Auflagefläche für die Auflageseite der Montagescheine sowie einen bezüglich der Auflagefläche abragenden und zum Hintergreifen des Halterandes ausgeführten Greiffortsatz aufweist. Ein solcher Greiffortsatz kann im Querschnitt in bekannter Weise wie ein Haken ausgeführt sein und eine Fügeschräge aufweisen. Des Weiteren durchdringt der Gewindeschaft das Halteelement in einem ersten Langloch und das Klemmelement in einem zweiten Langloch, wobei beide Langlöcher quer zur aufgelegten Montageschiene gerichtet sind. Zudem ist vorgesehen, dass das Halteelement und das Klemmelement axial zwischen den beiden mit dem Gewindeschaft im Eingriff stehenden Muttern angeordnet und mittels dieser an verschiedenen Positionen entlang des Gewindeschafts zusammenspannbar sind. Wesentlich ist außerdem, dass ein axiales Zusammenspannen eine radiale Annäherung des Klemmelements und der Montageschiene bewirkt. Hierzu weist das Halteelement mehrere nacheinander angeordneter Spannschrägen auf, die mit zunehmendem Abstand zur Montageschiene einheitlich ansteigen und auf denen das Klemmelement mittels korrespondierender Gegenschrägen abwärts gleiten kann. Bei zueinander verspannten Muttern ist die Montageschiene dann vom Klemmelement gegen den Greiffortsatz geklemmt ist und vom Greiffortsatz auf der Auflagefläche niedergehalten.

In montagefreundlicher Weise kann mit dem Gewindeschaft und den Muttern sowohl die Vorrichtung befestigt als auch indirekt die Montageschiene eingespannt werden. Eine eigene Schraube für die Befestigung der Montageschiene ist nicht mehr erforderlich. Mittels der zwei gleichgerichteten Langlöcher kann das Halteelement zusammen mit dem Klemmelement als Einheit bezüglich des Gewindeschafts radial verstellt werden. Der Keil und die Rampe der aus dem Stand der Technik bekannten Vorrichtung wären hierzu ungeeignet, da diese mit entsprechenden Langlöchern ausgestattet unzweckmäßig hoch ausfielen. Durch das erfindungsgemäße Vorsehen von jeweils mehreren nacheinander angeordneten und als Gleitpaarung wirkenden Spann- und Gegenschrägen können sowohl das Halteelement als auch das Klemmelement trotz des radialen Verstellbereichs flach und damit materialsparend ausgeführt werden, insbesondere als Strangpressteile mit gestanzten Langlöchern. Außerdem kann die Vorrichtung mit den beiden Muttern wie gefordert an beliebigen Positionen entlang des Gewindeschafts zusammengespannt werden.

Die Spannschrägen und die Gegenschrägen können in einfacher Weise im Querschnitt wie Sägezahnprofile mit asymmetrischem Flankenverlauf ausgeführt sein, wobei ansteigende und absteigende Flanken voneinander beabstandet sein können, insbesondere durch steigungsfreie Abschnitte. In einer besonders vorteilhaften Ausführungsform weist das Klemmelement eine zweite Gruppe von Gegenschrägen auf, die zu den ersten Gegenschrägen symmetrisch angeordnet sind, sodass das Klemmelement wechselweise um 180° um den Gewindeschaft gedreht montierbar ist. Im Querschnitt sind die ersten und zweiten Gegenschrägen dann als symmetrisches Sägezahnprofil oder bevorzugt mit steigungsfreien Abschnitten als symmetrisches Trapezprofil erkennbar. Um gleichmäßige Gleit- und Klemmverhältnisse über den gesamten Verstellbereich der Langlöcher zu erhalten, ist es unabhängig von der gewählten Profilform zweckmäßig, die Spann- und Gegenschrägen mehrheitlich um den Bereich der Langlöcher anzuordnen.

In einer vorteilhaften Weiterentwicklung umfasst die Vorrichtung ein Federelement, welches das Klemmelement in bezüglich der Spannschrägen ansteigender Richtung vorspannt. Auf diese Art kann die Vorrichtung zum Auflegen der Montageschiene selbsttätig offengehalten werden.

Nachfolgend wird die Erfindung anhand zweier Ausführungsbeispiele unter Bezugnahme auf Zeichnungen näher erläutert. Es zeigen:
- **Fig.1**: eine Vorrichtung, angeordnet an einer Stockschraube und eine Montageschiene haltend,
- **Fig. 2a** bis **2d**: die Montageabfolge der Vorrichtung gemäß **Fig.1**,
- **Fig. 3a** und **3b**: die Verstellbarkeit der Vorrichtung gemäß **Fig. 1** quer und längs zur Stockschraube,
- **Fig. 4**: eine weitere Vorrichtung, angeordnet an einer Stockschraube und eine Montageschiene haltend,
- **Fig. 5a** und **5b**: den letzten Montageschritt der Vorrichtung gemäß **Fig. 4**,
- **Fig. 6**: das gewendete Klemmelement der Vorrichtung gemäß **Fig. 4**,
- **Fig. 7**: das Halteelement der Vorrichtung gemäß **Fig. 4**.

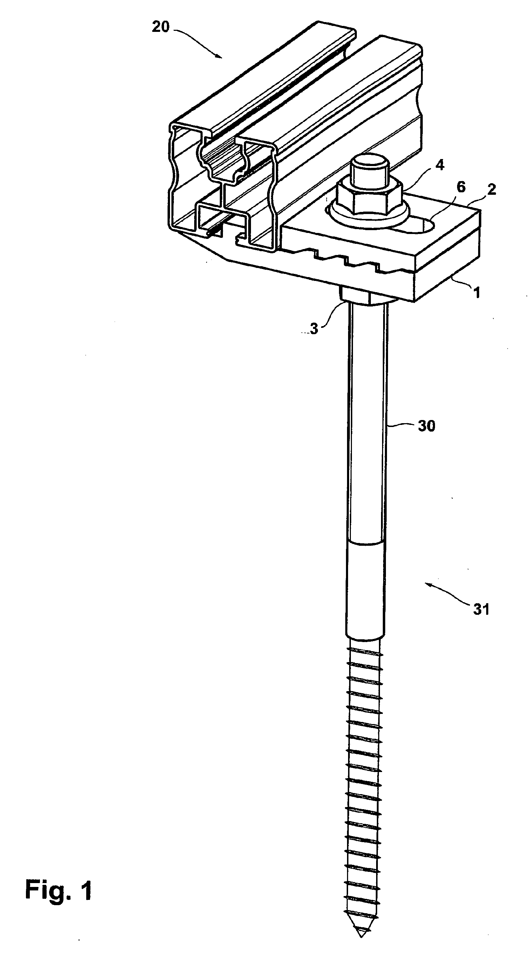

Die Vorrichtung gemäß **Fig. 1** umfasst ein Halteelement **1**, ein Klemmelement **2** sowie zwei Muttern **3** und **4**. Mittels der Vorrichtung ist eine Montageschiene **20**, die hier lediglich abschnittsweise dargestellt ist, am Gewindeschaft 30 einer gewöhnlichen Stockschraube **31** befestigt. Die Achse des Gewindeschafts **30** kreuzt hierbei die Montageschiene **20** außerhalb und im rechten Winkel. Die Stockschraube **31** kann mit ihrem unten vorgesehenen Schneidgewinde ortsfest angeordnet sein, beispielsweise an einem hölzernen Dachsparren.

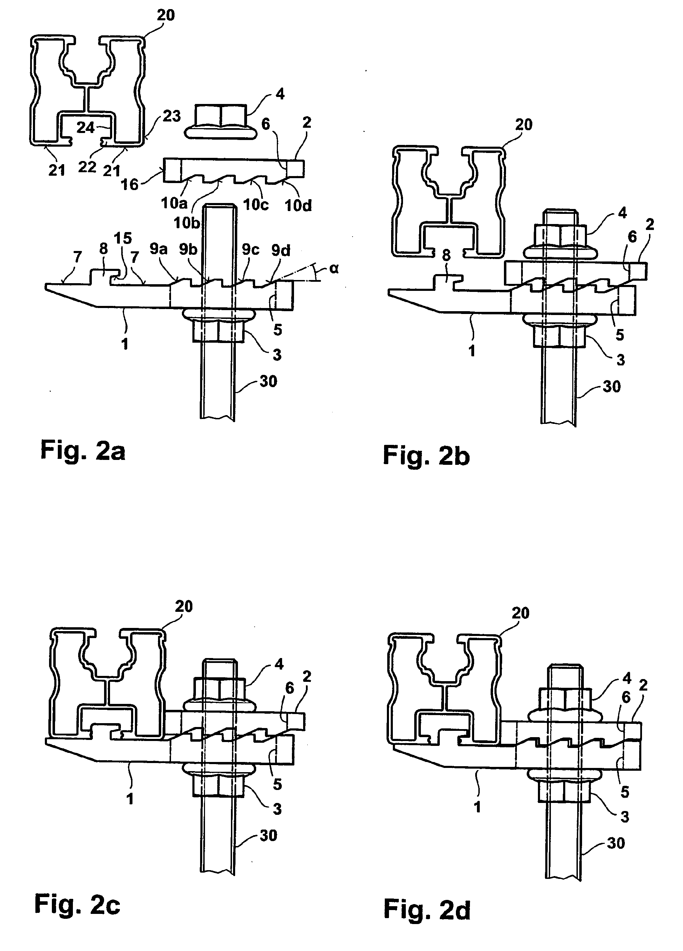

Wie im Weiteren besonders aus **Fig. 2a** ersichtlich ist, weist die Montageschiene **20** in bekannter Weise eine Auflageseite **21** mit einem hinterschnittenen Schraubkanal **24** auf, welche die Auflageseite **21** in zwei etwa gleich breite Hälften unterteilt. Der dem Gewindeschaft **30** nähere Öffnungsrand des hinterschnittenen Schraubkanals **24** ist als Halterand **22** für die Vorrichtung vorgesehen. Außerdem ist ein Teil der dem Gewindeschaft 30 zugewandten, rechten Außenseite der Montageschiene **20** als Klemmabschnitt 23 für die Vorrichtung vorgesehen, wobei der Klemmabschnitt **23** und die Auflageseite **21** senkrecht zueinander sind. An der der Auflageseite **21** gegenüberliegende Oberseite der Montageschiene **20** ist ein ebenfalls hinterschnittener Schraubkanal zu erkennen. Dieser kann zur Montage weiterer Bauteilen verwendet werden. Solche Bauteile können beispielsweise sogenannte Modulklemmen sein für die weitere Befestigung von Photovoltaik-Modulen, wie unter anderem in DE 20 2006 008 867 U1 anschaulich dargestellt ist.

Weiter ist aus **Fig. 2a** ersichtlich, dass das Halteelement **1** eine Auflagefläche **7** für die Auflageseite **21** der Montagescheine **20** sowie einen bezüglich der Auflagefläche **21** abragenden und zum Hintergreifen des Halterandes **22** ausgeführten Greiffortsatz **8** auf. Der Greiffortsatz **8** ist im Querschnitt als Haken erkennbar und wirkt gegenüber dem Halterand 22 wie ein zum Gewindeschaft **30** offener Haken. Außerdem weist der Greiffortsatz eine Fügeschräge **15** auf, unter die der Halterand **22** in einfacher Weise formschlüssig einschiebbar ist, wie im endmontierten Zustand gemäß **Fig. 2d** zu erkennen ist. Die Fügeschräge **15** und der Halterand **22** sind außerdem so ausgeführt, dass die Montageschiene **20** auch im Falle einer Schräganordnung bereits vorläufig klemmend am Greiffortsatz **8** gehalten ist, was bei der Montage auf einem Schrägdach besondere Vorteile bietet. Weiter ist zu erkennen, dass der Greiffortsatz **8** die Auflagefläche **7** in zwei Abschnitte unterteilt und diese Abschnitte die Auflageseite **21** der Montageschiene **20** in statisch günstiger Weise beidseits des hinterschnittenen Schraubkanals **24** tragen.

Wird die Vorrichtung gemäß **Fig. 2b** zusammengesetzt, durchdringt der Gewindeschaft **30** das Halteelement in einem ersten Langloch **5** und das Klemmelement in einem zweiten Langloch **6**, wobei beide Langlöcher **5** und **6** quer zur aufgelegten Montageschiene **20** gerichtet sind und das Halteelement **1** und das Klemmelement **2** axial zwischen den beiden mit dem Gewindeschaft **30** im Eingriff stehenden Muttern **3** und **4** angeordnet sind. Im endmontierten Zustand gemäß **Fig. 2d** sind das Halteelement **1** und das Klemmelement **2** dann mittels der Muttern 3 und **4** an einer von mehreren Positionen entlang des Gewindeschafts **30** zusammengespannt. Die Rückseiten des Halteelements **1** und des Klemmelements **2** sind dazu plan und beide senkrecht zur Achse des Gewindeschafts 30, sodass dort die Muttern **3** und 4 geeignet zur Anlage kommen können. Sowohl das Halteelement **1** als auch das Klemmelement **2** sind als flache Strangpressteile ausgeführt, wobei die Langlöcher **5** und **6** vorzugsweise gestanzt sind.

Damit ein axiales Zusammenspannen zu einer radiale Annäherung des Klemmelements 2 und der Montageschiene **20** führt, weist das Halteelement **1**, wie wieder aus **Fig. 2a** ersichtlich ist, vier nacheinander angeordneten Spannschrägen **9a** bis **9d** auf, die mit zunehmendem Abstand zur Montageschiene **20** einheitlich ansteigen und auf denen das Klemmelement **2** abwärts gleiten kann. Das Klemmelement **2** weist hierzu vier korrespondierende Gegenschrägen **10a** bis **10d** auf, die mit den Spannschrägen **9a** bis **9d** jeweils Gleitpaarungen bilden, so dass das Klemmelement **1** gegenüber dem Halteelement 2 leichtgängig verschoben werden kann. Gemäß Montageschritt von **Fig. 2c** nach **Fig. 2d** führt dabei eine axiale Bewegung des Klemmelements **1** zum Halteelement **2** zu einer radialen Bewegung des Klemmelements **1** zum Klemmabschnitt **23** der Montageschiene **20.** Bei zueinander verspannten Muttern **3** und **4** gemäß **Fig. 2d** ist die Montageschiene **20** schließlich von der einen Stirnseite **16** des Klemmelements **1** gegen den Greiffortsatz **8** geklemmt und zudem vom Greiffortsatz **8** auf der Auflagefläche **7** niedergehalten.

Die Spannschrägen 9a bis 9d und die Gegenschrägen 10a bis 10d sind im Querschnitt gemäß Fig. 2a als korrespondierende Sägezahnprofile mit asymmetrischem Flankenverlauf zu erkennen, wobei ansteigende und absteigende Flanken durch steigungsfreie Abschnitte beabstandet sind. Die Spannschrägen 9a und 9d sind einheitlich ausgeführt. So weisen diese eine einheitliche Steigung a von hier rund 25° bezüglich einer zum Gewindeschaft 30 senkrechten Ebene auf. Die rückseitigen bzw. absteigenden Flanken stehen senkrecht auf dieser Ebene. Außerdem ist ersichtlich, dass die Spannschrägen 9a bis 9d auf demselben Niveau beginnen und enden und untereinander gleich beabstandet sind. Die Gegenschrägen 10a bis 10d am Klemmelements 2 sind korrespondierend ausgeführt bzw. bilden eine passende Gegenform.

Damit das Klemmelement **2** nach dem Aufsetzen auf den Gewindeschaft **30** gemäß **Fig. 2b** nach **Fig. 2c** nicht selbsttätig an den Spannschrägen **9a** bis **9d** abwärts gleitet und infolge das Auflegen der Montageschiene **20** blockiert, kann das Klemmelement **1** in einfacher Weise bei der Montage von Hand zurückgehalten werden. In einer nicht näher dargestellten Weiterentwicklung ist es möglich, dass die Vorrichtung ein Federelement umfasst, welchesdas Klemmelement **1** vorspannt und in einem oberen Abschnitt auf den Spannschrägen **9a** bis **9d** nachgiebig hält. Erst mit Festziehen der Mutter **4** wird das Klemmelement **1** dann gegen die Federkraft dieses Federelements abwärts bzw. zur Montageschiene **20** verschoben.

Alternativ zum Montageschritt von **2b** nach **2c** ist es auch möglich, zunächst die Montageschiene **20** auf das Halteelement **1** und erst anschließend das Klemmelement **1** und die Mutter **4** auf den Gewindeschaft **30** aufzusetzen. Die dargestellte Montageabfolge wird jedoch bevorzugt, da es hierbei möglich ist, die Vorrichtung an einer losen Stockschraube bereits vorab anzuordnen und dem Monteur so eine vormontierte Baugruppe zur Verfügung zu stellen. Eine ggf. durch das vorerwähnte Federelemente erreichte Vormontagestellung ähnlich der gemäß **Fig. 2b** ist dabei besonders zweckmäßig.

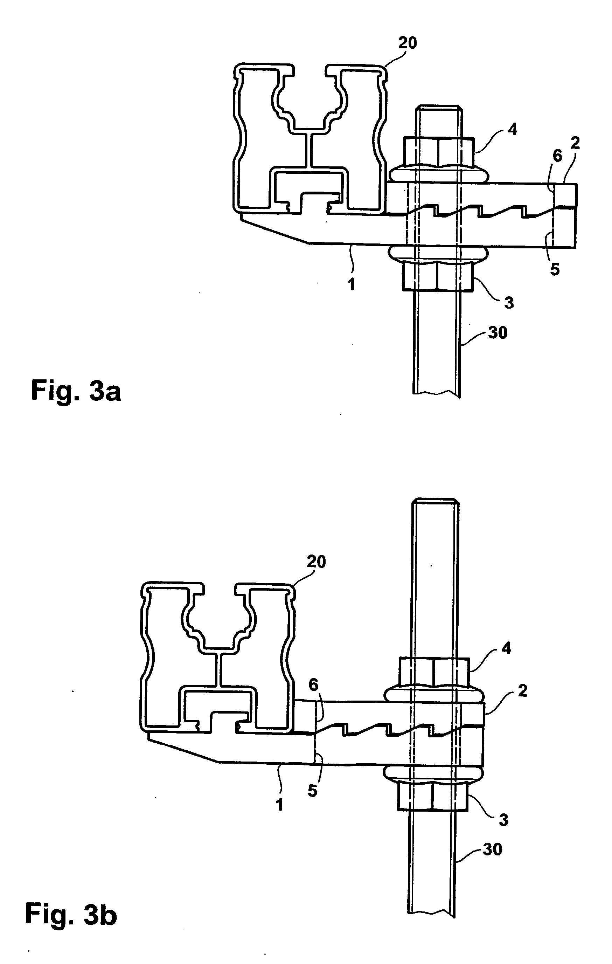

**Fig. 3a** und **Fig. 3b** veranschaulichen die radiale und axiale Verstellbarkeit der Vorrichtung. Die Montageschiene **20** kann mittels der Vorrichtung gemäß **Fig. 1** in unterschiedlichen Abständen zum Gewindeschaft **30** montiert werden. So zeigt **Fig.** 3a eine Stellung mit geringem Abstand und **Fig. 3b** eine Stellung mit größerem Abstand zum Gewindeschaft **30.** Dies ist besonders dann zweckmäßig, falls eine längere Montageschiene an mehreren Gewindeschäften befestigt werden soll, die nicht exakt in einer Flucht liegen. Das Maß dieser radialen Verstellbarkeit wird im Wesentlichen durch die Länge der Langlöcher **5** und **6** bestimmt. Vorteilhaft ist in diesem Zusammenhang auch, dass die Spannschrägen **9a** bis **9d** und die Gegenschrägen **11a** bis **11d** um den Bereich der Langlöcher **5** und **6** angeordnet sind, sodass das Klemmelement **2** beim Verspannen gegenüber dem Halteelement 1 nicht verkippt und entlang der Langlöcher **5** und **6** ähnliche Gleit- und Klemmverhältnisse herrschen. Im endmontierten Zustand sind die Langlöcher **5** und **6** etwa deckungsgleich, wobei es auch denkbar ist, diese für einen maximalen Verstellbereich in der Position gemäß Fig. 2b deckungsgleich auszuführen.

Wie zudem aus **Fig. 3a** und **Fig. 3b** zu erkennen ist, kann die Vorrichtung gemäß **Fig. 1** außerdem an verschiedenen Positionen entlang des Gewindeschafts **30** angeordnet sein. So zeigt **Fig. 3a** eine Stellung mit geringem Abstand und **Fig. 3b** eine Stellung mit größerem Abstand zum freien Ende **32** des Gewindeschafts **30.** Dies ist besonders dann zweckmäßig, falls eine längere Montageschiene an mehreren Gewindeschäften befestigt werden soll, die nicht exakt in derselben Ebene enden, wie es beispielsweise bei einem unebenen Untergrund oder unterschiedlich tief eingeschraubten Stockschrauben der Fall sein kann. Je länger ein Gewindeschaft ist, desto weiter ist auch der axiale Verstellbereich, in dem das Halteelement **1** und das Klemmelement **2** mittels der Muttern **3** und **4** gegeneinander verspannbar sind. Neben der radialen und axialen Verstellbarkeit ist die Vorrichtung gemäß **Fig. 1** selbstverständlich auch um die Achse des Gewindeschafts **30** verdrehbar.

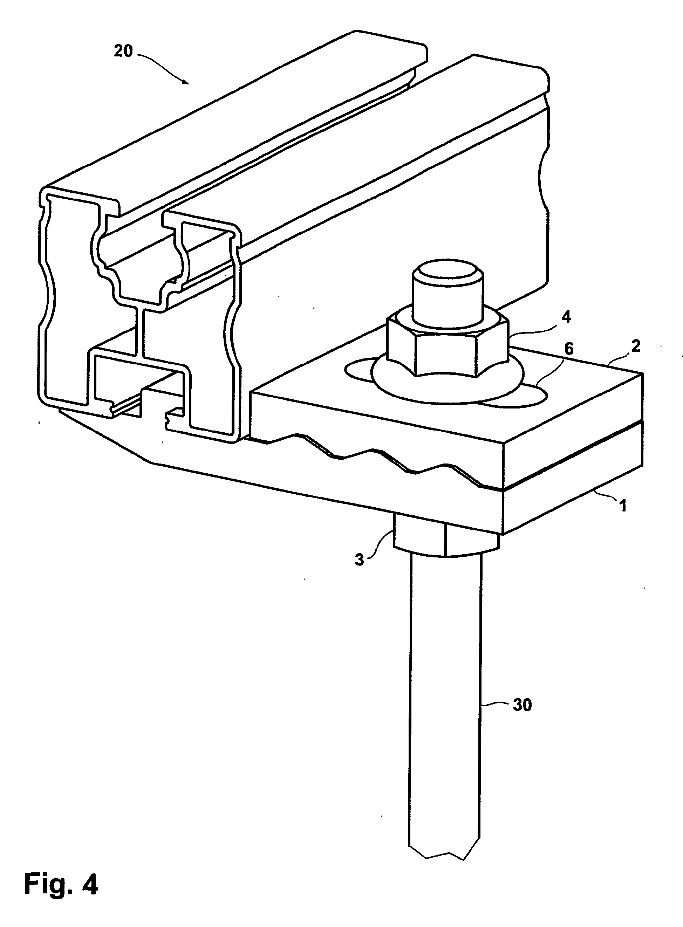

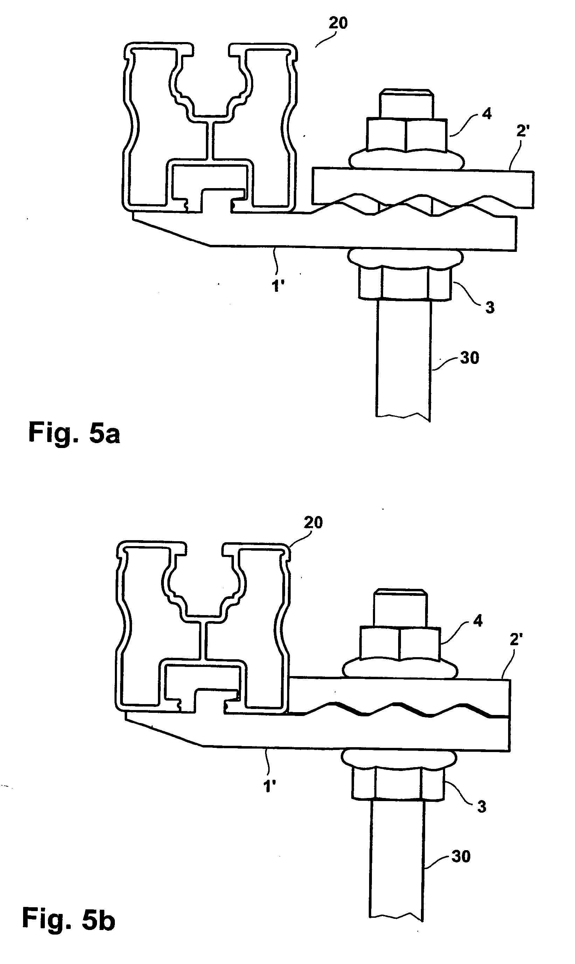

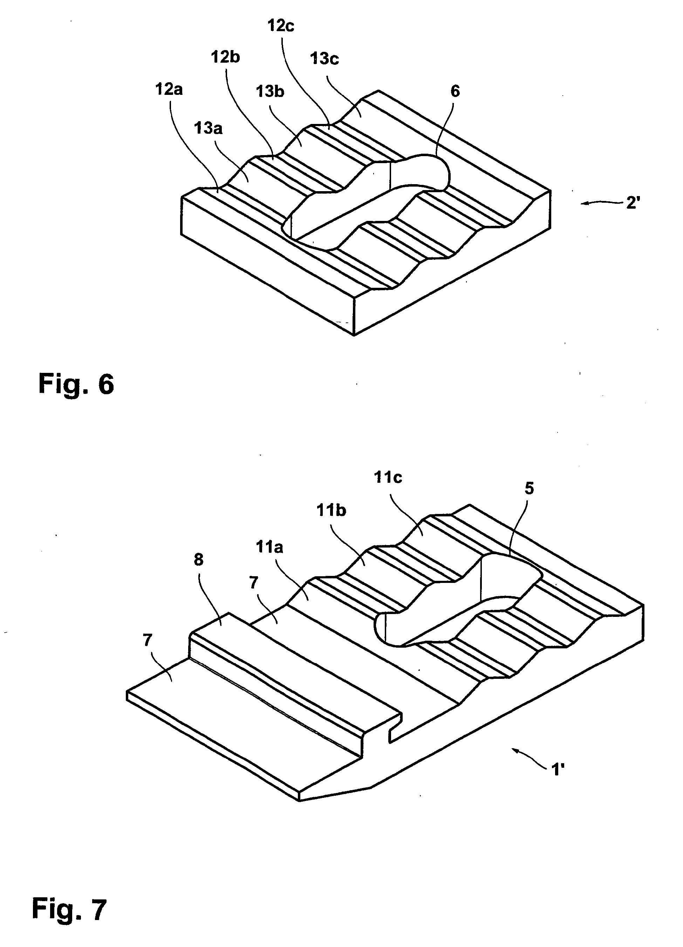

**Fig. 4** zeigt eine weitere erfindungsgemäße Vorrichtung, die zur Vorrichtung gemäß **Fig. 1** vergleichbar ist. Wie insbesondere aus **Fig. 6** und **Fig. 7** erkennbar ist, weist das Halteelement **1'** drei Spannschrägen **11a** bis **11c** und das Klemmelement **2'** drei Gegenschrägen **12a** bis **12c** auf. Der wesentliche Unterschied zur Vorrichtung gemäß **Fig. 1** besteht darin, dass am Klemmelement **2'** eine zweite Gruppe mit drei Gegenschrägen **13a** bis **13c** vorgesehen ist, die zu den ersten Gegenschrägen **12a** bis **12c** symmetrisch angeordnet sind. Im Querschnitt sind die ersten und zweiten Gegenschrägen **12a** bis **12c** und **13a** bis **13c** daher als symmetrisches Trapezprofil erkennbar. Dadurch kann das Klemmelement **1'** auch um 180° um den Gewindeschaft 30 gedreht montiert werden, was das Zusammensetzen vor Ort, insbesondere auf einem Dach, erleichtert. Anhand **Fig. 6** und **Fig. 7** ist weiter gut zu erkennen, dass wie bei der Vorrichtung gemäß **Fig. 1** die Spann- und Gegenschrägen jeweils um den Bereich der Langlöcher **5** bzw. **6** angeordnet sind. **Fig. 5a** und **Fig. 5b** zeigen schließlich, vergleichbar zu **Fig. 2c** und **Fig. 2d****,** den letzten Montageschritt der Vorrichtung gemäß **Fig. 4**, wobei hier die Montageschiene **20** bereits von Hand am Halterand unter den Greiffortsatz des Halteelements geschoben ist.

## Patentansprüche

1. Vorrichtung zur Befestigung einer Montageschiene an einem Gewindeschaft, insbesondere dem einer Stockschraube, wobei die Montageschiene (**20**) eine Auflageseite (**21**) und einen Halterand (**22**) aufweist, und die Vorrichtung ein Halteelement (**1, 1**'), ein Klemmelement (2, **2**') und eine erste Mutter (3) umfasst, und das Halteelement (**1**, **1**') eine Auflagefläche **(7**) für die Auflageseite (**21**) der Montageschiene (**20**) sowie einen bezüglich der Auflagefläche (**7**) abragenden und zum Hintergreifen des Halterandes (**22**) ausgeführten Greiffortsatz (**8**) aufweist, und der Gewindeschaft (**30**) das Halteelement (**1**, **1**') in einem ersten Langloch (**5**) und das Klemmelement (**2**, **2**') in einem zweiten Langloch (**6**) durchdringt, wobei beide Langlöcher (**5**, **6**) quer zur Montageschiene (**20**) gerichtet sind, **dadurch gekennzeichnet, dass** die Vorrichtung eine zweite Mutter (**4**) umfasst, und das Halteelement (**1**, **1**') und das Klemmelement (**2**, **2**') axial zwischen den beiden mit dem Gewindeschaft (**30**) im Eingriff stehende Muttern (**3**, **4**) angeordnet und mittels dieser an verschiedenen Positionen entlang des Gewindeschafts (**30**) zusammenspannbar sind, und ein Zusammenspannen eine Annäherung des Klemmelements (**2**, **2**') und der Montageschiene (**20**) bewirkt und hierzu das Halteelement (1, 1') mehrere nacheinander angeordnete Spannschrägen (**9a** .. **9d**; **11a** .. **11c**) aufweist, die mit zunehmendem Abstand zur Montageschiene (**20**) einheitlich ansteigen und auf denen das Klemmelement (**2**, **2'**) mittels korrespondierender Gegenschrägen **(10a** .. **10d**; **12a** .. **12c**; **13a** .. **13c**) abwärts gleiten kann, und bei zueinander verspannten Muttern (3, 4) die Montageschiene (20) vom Klemmelement (2, 2') gegen den Greiffortsatz (8) geklemmt und vom Greiffortsatz (8) auf der Auflagefläche (7) niedergehalten ist.

2. Vorrichtung nach Anspruch 1, **dadurch gekennzeichnet, dass** der Halterand (22) der Rand eines hinterschnittenen Schraubkanals (24) in der Auflageseite (21) der Montageschiene (20) ist.

3. Vorrichtung nach Anspruch 1, **dadurch gekennzeichnet, dass** das Halteelement (1, 1') ein Strangpressteil ist, aus dem das erste Langloch (5) gestanzt ist, und/oder dass das Klemmelement (2, 2') ein Strangpressteil ist, aus dem das zweite Langloch (6) gestanzt ist.

4. Vorrichtung nach Anspruch **1**, **dadurch gekennzeichnet, dass** die Spannschrägen (**9a** .. **9d**; **11a** .. **11c**) mehrheitlich um den Bereich des ersten Langlochs (**5**) und/oder die Gegenschrägen (**10a** .. **10d**; **12a** .. **12c**; **13a** .. **13c**) mehrheitlich um den Bereich des zweiten Langlochs (**6**) angeordnet sind.

5. Vorrichtung nach Anspruch **1**, **dadurch gekennzeichnet, dass** das Klemmelement (**2**') symmetrisch zu den Gegenschrägen (**12a** .. **12c**) angeordnete weitere Gegenschrägen (**13a** .. **13c**) aufweist, sodass das Klemmelement (**2**') wechselweise um 180° um den Gewindeschaft (**30**) gedreht montierbar ist.

6. Vorrichtung nach Anspruch 1, **dadurch gekennzeichnet, dass** die Vorrichtung ein Federelement umfasst, welches das Klemmelement (**2**, **2**') in bezüglich der Spannschrägen (9a .. 9d; 11a .. 11c) ansteigender Richtung vorspannt.

7. Baugruppe mit einer Vorrichtung nach einem der vorhergehenden Ansprüche, **dadurch gekennzeichnet, dass** die Vorrichtung an einer den Gewindeschaft (30) aufweisenden Stockschraube (31) vormontiert ist.

8. Halteelement (1, 1') einer Vorrichtung gemäß einem der Ansprüche 1 bis 7.

9. Halteelement (1,1') mit einer Auflagefläche (7) und einem bezüglich der Auflagefläche (7) abragenden Greiffortsatz (8) und einem ersten Langloch (5) und mehrerer nacheinander angeordneten, einheitlich ansteigenden Spannschrägen (9a .. 9d; 11a .. 11c), geeignet für eine Vorrichtung gemäß einem der Ansprüche 1 bis 7.

## Claims

1. An apparatus for fastening a mounting rail on a threaded shank, in particular that of a hanger bolt, wherein the mounting rail (**20**) has a bearing side (**21**) and a retaining edge (**22**), and the apparatus comprises a retaining element (**1**, **1**'), a clamping element (**2**, **2**') and a first nut (**3**), and the retaining element (**1**, **1**') has a bearing surface (**7**) for the bearing side (**21**) of the mounting rail (**20**) and also a gripping extension (**8**), which projects in relation to the bearing surface (**7**) and is configured for engaging behind the retaining edge (**22**), and the threaded shank (**30**) passes through the retaining element (**1**, **1**') in a first slot (**5**) and through the clamping element (**2**, **2**') in a second slot (**6**), wherein the two slots (**5**, **6**) are directed transversely to the mounting rail (**20**), **characterized in that** the apparatus comprises a second nut (**4**), and the retaining element (**1**, **1**') and the clamping element (**2**, **2**') are arranged axially between the two nuts (**3**, **4**), which engage with the threaded shank (**30**), and can be braced together by means of these nuts at various positions along the threaded shank (**30**), and bracing together causes the clamping element (**2**, **2**') and the mounting rail (**20**) to advance toward one another and, for this purpose, the retaining element (**1**, **1**') has a plurality of successively arranged bracing slopes (**9a** .. **9d**; **11a** .. **11c**), which slope up uniformly with increasing distance from the mounting rail (**20**) and on which the clamping element (**2**, **2**') can slide downward by means of corresponding mating slopes (**10a** .. **10d**; **12a** .. **12c**; **13a** .. 13c), and, with nuts (**3**, **4**) braced in relation to one another, the mounting rail (**20**) is clamped against the gripping extension (**8**) by the clamping element (2, **2**') and is held down on the bearing surface (**7**) by the gripping extension (**8**).

2. The apparatus according to claim 1, **characterized in that** the retaining edge (**22**) is the edge of an undercut screw-connection channel (**24**) in the bearing side (**21**) of the mounting rail (**20**).

3. The Apparatus according to claim **1**, **characterized in that** the retaining element (**1**, **1**') is an extrusion out of which the first slot (**5**) is punched, and/or **in that** the clamping element (**2**, **2**') is an extrusion out of which the second slot (**6**) is punched.

4. The apparatus according to claim 1, **characterized in that** the bracing slopes (**9a** .. **9d**; **11a** .. **11c**) are arranged mostly around the region of the first slot (**5**) and/or the mating slopes (**10a** .. **10d**; **12a** .. **12c**; **13a** .. **13c**) are arranged mostly around the region of the second slot (**6**).

5. The apparatus according to claim 1, **characterized in that** the clamping element (**2**') has further mating slopes (**13a** .. **13c**), which are arranged symmetrically in relation to the mating slopes (**12a** .. **12c**), and therefore the clamping element (**2**') can be mounted in a manner in which it is rotated alternately through 180° about the threaded shank (**30**).

6. The apparatus according to claim 1, **characterized in that** the apparatus comprises a resilient element, which biases the clamping element (**2**, 2') in a direction which slopes up in relation to the bracing slopes (**9a** .. **9d**; **11a** .. **11c**).

7. An assembly having an apparatus according to any one of the preceding claims, **characterized in that** the apparatus is pre-assembled on a hanger bolt (**31**) having the threaded shank (**30**).

8. A retaining element (**1**, **1**') of an apparatus according to any one of claims 1 to 7.

9. A retaining element (**1**, **1**') having a bearing surface (**7**) and a gripping extension (**8**), which projects in relation to the bearing surface (**7**), and a first slot (**5**) and a plurality of successively arranged clamping slopes (**9a** .. **9d**; 11a .. **11c**), which slope up uniformly, suitable for an apparatus according to any one of Claims 1 to 7.

## Revendications

1. Un dispositif servant à fixer un rail de montage sur une tige filetée, en particulier celle d'une vis à double filetage, le rail (**20**) de montage présentant un côté (**21**) d'appui et un bord (**22**) de retenue, et le dispositif comprenant un élément (**1**, **1**') de retenue, un élément (**2**, 2') de serrage et un premier écrou (**3**), et l'élément (**1**, **1**') de retenue présentant une surface (**7**) d'appui pour le côté (**21**) d'appui du rail (20) de montage ainsi qu'une saillie (**8**) de préhension saillant par rapport à la surface (**7**) d'appui et réalisée pour venir en prise par l'arrière avec le bord (**22**) de retenue, et la tige (**30**) filetée traversant élément (**1**, **1**') de retenue dans un premier trou (**5**) oblong et élément (**2**, **2**') de serrage dans un deuxième trou (**6**) oblong, les deux trous (**5**, **6**) oblongs étant orientés transversalement au rail (**20**) de montage, **caractérisé en ce que** le dispositif comprend un deuxième écrou (**4**) et l'élément (**1**, **1**') de retenue et l'élément (**2**, **2**') de serrage sont disposés axialement entre les deux écrous (**3**, **4**) en prise avec la tige (**30**) filetée et peuvent être serrés au moyen de ceux-ci en diverses positions le long de la tige (**30**) filetée, et un serrage provoque un rapprochement de élément (**2**, **2**') de serrage et du rail (**20**) de montage et à cet effet l'élément (**1**, **1**') de retenue présente plusieurs biseaux (**9a** .. **9d**; **11a** .. **11c**) de serrage disposés les uns derrière les autres, qui montent sous forme unitaire avec une distance croissante par rapport au rail (**20**) de montage et sur lesquels l'élément (**2**, **2**') de serrage peut glisser vers le bas au moyen de biseaux (**10a** .. **10d**; **12a** .. **12c**; **13a** .. **13c**) conjugués correspondants, et lorsque les écrous (**3**, **4**) sont serrés l'un vers l'autre, le rail (**20**) de montage est serré par l'élément (**2**, **2**') de serrage contre la saillie (**8**) de préhension et est maintenu vers le bas par la saillie (**8**) de préhension sur la surface (**7**) d'appui.

2. Le dispositif selon la revendication 1, **caractérisé en ce que** le bord (**22**) de retenue est le bord (**24**) d'un canal de vis en contre-dépouille dans le côté (**21**) d'appui du rail (**20**) de montage.

3. Le dispositif selon la revendication 1, **caractérisé en ce que** l'élément (**1**, **1**') de retenue est une pièce extrudée dans laquelle le premier trou (**5**) oblong est estampé et/ou **en ce que** l'élément (**2**, **2**') de serrage est une pièce extrudée dans laquelle le deuxième trou (**6**) oblong est estampé.

4. Le dispositif selon la revendication 1, **caractérisé en ce que** les biseaux (**9a** .. **9d** ; **11a** .. **11c**) de serrage sont disposés majoritairement autour de la région du premier trou (**5**) oblong et/ou les biseaux (**10a** .. **10d**; **12a** .. **12c**; **13a** .. **13c**) conjugués sont disposés majoritairement autour de la région du deuxième trou (**6**) oblong.

5. Le dispositif selon la revendication 1, **caractérisé en ce que** l'élément (**2**') de serrage présente des biseaux (**13a** .. **13c**) conjugués supplémentaires disposés symétriquement par rapport aux biseaux (**12a** .. **12c**) conjugués, de telle sorte que l'élément (**2**') de serrage puisse être monté en alternance de manière tournée de 180° autour de la tige (**30**) filetée.

6. Le dispositif selon la revendication 1, **caractérisé en ce que** le dispositif comprend un élément de ressort qui précontraint l'élément (**2**, **2**') de serrage dans la direction montante par rapport aux biseaux (**9a** .. **9d**; **11a** .. **11c**) de serrage.

7. Un module comprenant un dispositif selon l'une quelconque des revendications précédentes, **caractérisé en ce que** le dispositif est prémonté sur une vis (**31**) à double filetage présentant la tige (**30**) filetée.

8. Un élément (**1**, **1**') de retenue d'un dispositif selon l'une quelconque des revendications 1 à 7.

9. Un élément (**1**, **1**') de retenue comprenant une surface (**7**) d'appui et une saillie (**8**) de préhension saillant par rapport à la surface (**7**) d'appui, et un premier trou (**5**) oblong et plusieurs biseaux (**9a** .. **9d**; **11a** .. **11c**) de serrage montant de manière unitaire, disposés les uns derrière les autres, approprié pour un dispositif selon l'une quelconque des revendications 1 à 7.
